# EUROPEAN PATENT SPECIFICATION

(11) **EP 0 629 961 B1**
(45) Date of publication and mention of the grant of the patent: **26.03.2003**
(21) Application number: 94303933.9
(22) Date of filing: 01.06.1994
(51) Int. Cl.: G06F 17/30

(54) **Method and apparatus for conversion of transferred digital data**
Verfahren und Gerät zum Konvertieren von übertragenen digitalen Daten
Méthode et appareil de conversion de données digitales transmises

(30) Priority: 04.06.1993 US 70982
(43) Date of publication of application: 21.12.1994
(73) Proprietor: Baan Process Solutions, Inc, Newton, MA 02150 (US)
(72) Inventor: Pitt, Janice S., Bellingham, MA 02019 (US); Lawton, John, West Roxbury, MA 02132 (US)
(74) Representative: Greenwood, John David

(56) References cited:
- EP-A- 0 408 132
- EP-A- 0 449 494
- PATENT ABSTRACTS OF JAPAN vol. 17, no. 348 (9-1566) 30 June 1993 & JP-A-05 046 449 (CHUBU NIPPON DENKI SOFTWARE KK) 26 February 1993
- CHIP ZEITSCHRIFT FUER MIKROCOMPUTER-TECHNIK, no.2SUP, February 1989, WURZBURG DE pages 250 - 254 D. WINKLER : 'Austausch mit Komfort'

## Description

A portion of the disclosure of this patent document includes Appendices A,B and C filed at the European Patent Office with this application which contain material subject to copyright protection. The copyright owner has no objection to facsimile reproduction by anyone of the patent document or the patent disclosure, as it appears in the European Patent Office patent file or records, but otherwise reserves all copyright rights whatsoever.

This invention relates to the conversion of digital data transferred between relational databases and more particularly, for example, to the conversion of data transferred between computer systems running different versions of the same software. The invention finds particular application with the transfer of data between databases, for example relational databases.

A localized working environment with multiple computer systems typically runs a single version of any given software package, thereby making simple the transfer and sharing of data between the systems. Thus, for example, a company that uses computers to monitor and control manufacturing operations at a single site will generally run the very same computer-aided manufacturing software package on each of its computers. In the event data is transferred from one of those systems, it need not be converted for use on another system.

In a non-localized environment, however, sharing of data between multiple computer systems can be problematic. Companies having geographically diverse facilities may run different versions of a given software package at each site. For example, a multinational company may employ a first version of a software package in connection with its operations in France, while using a second version of that same package for its operations at a sister facility in Germany. While it may be desirable to transfer data between these facilities, differences in the structure of the underlying data files may make such a transfer difficult if not virtually impossible.

According to one prior art solution, data transferred between computer systems (e.g., between the French and German sites) would be printed at one site and manually re-entered at the other. This results in time delay, loss of man-hours and a corresponding loss in productivity. According to another such solution, a programmer would be employed to write a special-purpose computer to convert records used at one site to those used at the other site. The difficulties in finding a programmer with sufficient knowledge of the data structures and of the local system and software may itself prove to be a daunting task.

In view of the foregoing, an object of the invention is to provide improved methods and apparatus for sharing data, for example for sharing data used by different software versions of a given software package.

The invention can also provide improved methods and apparatus for converting data transferred between computer systems employing different software versions.

The invention can also provide such improved methods and apparatus that are more cost effective, and that are compatible with preexsting computer hardware.

The invention may be used for converting data transferred between relational databases.

Other general and more specific objects of this invention will in part be obvious and will in part be evident from the description and drawings which follow.

The article published in the Journal CHIP ZEITSCHRIFT FUER MIKROCOMPUTER-TECHNIK, no.2SUP, February 1989, WURZBURG DE pages 250 - 254 D. WINKLER : 'Austausch mit Komfort' describes a data conversion apparatus and a method of data conversion according to the preambles of claims 1 and 7, respectively. The present invention is characterized by the features of the characterizing portions of those claims. Optional features are recited in the dependent claims.

The invention provides a data conversion apparatus and method for translating information stored of a first computer program to that stored of a second computer program and, more particularly, for translating information in a relational database used by a first selected version of a computer program into information stored in a second relational database for use by a second selected version of a computer program. The apparatus and method thus allow the sharing of data by computer systems running different versions of a given software package.

A data conversion apparatus according to one aspect of the invention may include a first file storage element for storing a first relational database (i.e., a spreadsheet-like collection of information) having a plurality of digital records (each constituting, typically, a collection of fields of data relating to a single entity or transaction similar to a row in a spreadsheet) representing information used by a first selected version of a computer program, and a second file storage element capable of storing a second relational database representing at least a portion of the information from the first database for use by a second selected version of the computer program. The apparatus further includes a file management element that converts information from the first database for storage in the second. That conversion is performed as a function of the identities of the first and second selected versions of the computer program (e.g., as a function of their names and respective version numbers).

The file management element may include table entry elements that identify, in table-like form, the procedures for translating individual records or fields of information stored in the first relational database into a form compatible with the second computer program version. For example, a record structure contained within the first relational database contains information used by a first version of a computer program, e.g., *version 2*.*0*. These *version 2.0*-compatible records are processed by the file management element for translation into record structures that are compatible with a second version of the computer program, e.g., *version 3.0*, and stored within the second relational database.

Each file management table entry may store the names of software subroutines, each of which executes steps necessary for converting data between the respective formats.

An execution element may access a given entry listed in a selected table entry element based on the respective identities of the versions (e.g., the version numbers) of the computer programs.

The first and second file storage elements (along with their respective databases) may reside remotely from one another. The file management element may include a data transfer element and a disassembler element. The data transfer element may convert records in the first database, prior to transfer to the remote database, into a standard transfer file format. The disassembler element disassembles the records, subsequent to transfer, component structures (e.g., fields) that are subsequently processed by the conversion subroutine.

Still other aspects of the invention provide a method for data transfer and conversion paralleling the operations described above.

Embodiments of the present invention will now be described, by way of example only, with reference to the accompanying drawings, of which:
Figure 1 illustrates data and control signal pathways utilized by a preferred data conversion apparatus of the present invention;
Figure 2 is a schematic block diagram of a preferred data conversion apparatus according to the invention;
Figure 3 depicts a still more detailed perspective of a preferred data translator of Figure 2 according to a preferred embodiment of the invention;
Figure 4 depicts components of a record structure used in connection with a preferred data transfer process in an apparatus according to the invention;
Figures 5 through 7 depict a flowchart of a preferred data conversion process according to the invention.

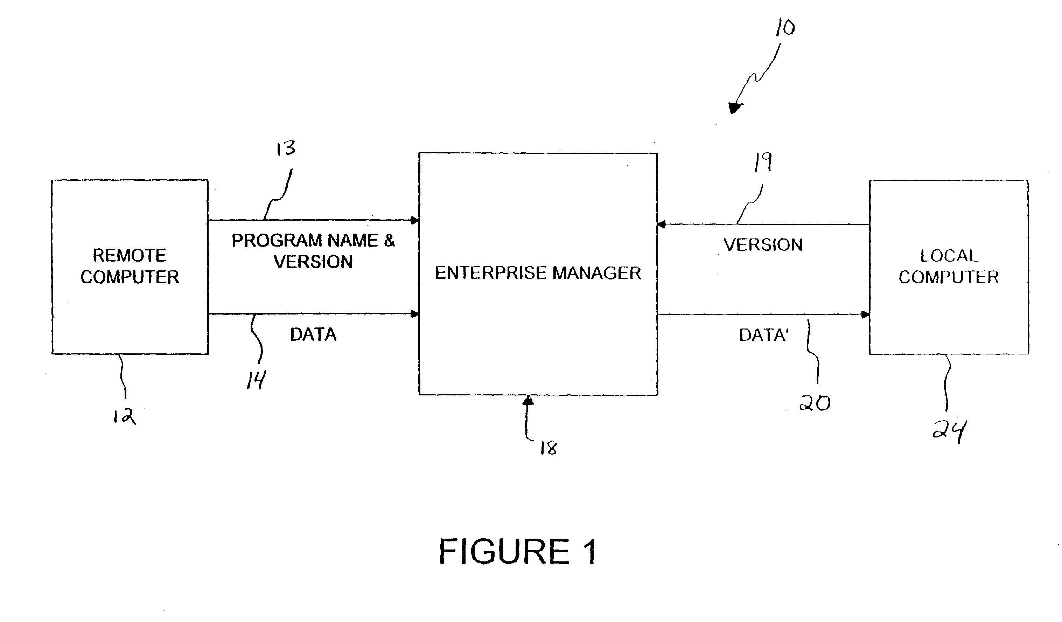

Figure 1 illustrates data and control signal pathways utilized by a preferred data conversion apparatus of the present invention. The system 10 includes a remote computer 12, a file management element 18 (referred to as an "enterprise manager"), and a local computer 24, coupled as shown. Although the illustration shows two computer systems, those skilled in the art will appreciate that the teachings herein can be applied to the conversion of information transferred between more computer systems, as well as the conversion of information between differing versions of a selected program residing on a single computer system.

Referring to the drawing, the remote computer 12 communicates to the enterprise manager 18 a signal 13 representative of the name of a selected program for which data is to be converted and the version of that program used by the remote computer 12. The remote computer 12 also communicates to the enterprise manager 18 at least selected data 14 to be converted. The local computer 24 likewise communicates to the enterprise manager 18 a signal 19 representative of the identity of the version of the program being used by that computer 24.

The enterprise manager 18 responds to the information provided by signals 13 and 19 by converting the information represented by signal 14 into data having a format for use by the second version of the program on the remote computer. That converted data is communicated to the remote computer as data signal 20.

Computers 12 and 24 preferably comprise conventional general-purpose computers that are programmed, operated and adapted with an enterprise manager 18 in accord with the teachings below. Those skilled in the art will appreciate that, although the discussion of the illustrated embodiment herein is directed to the conversion of data transferred between two versions of a given program, those teachings are equally applicable to the conversion of data transferred between any relational databases, or other computer programs, having known file structures.

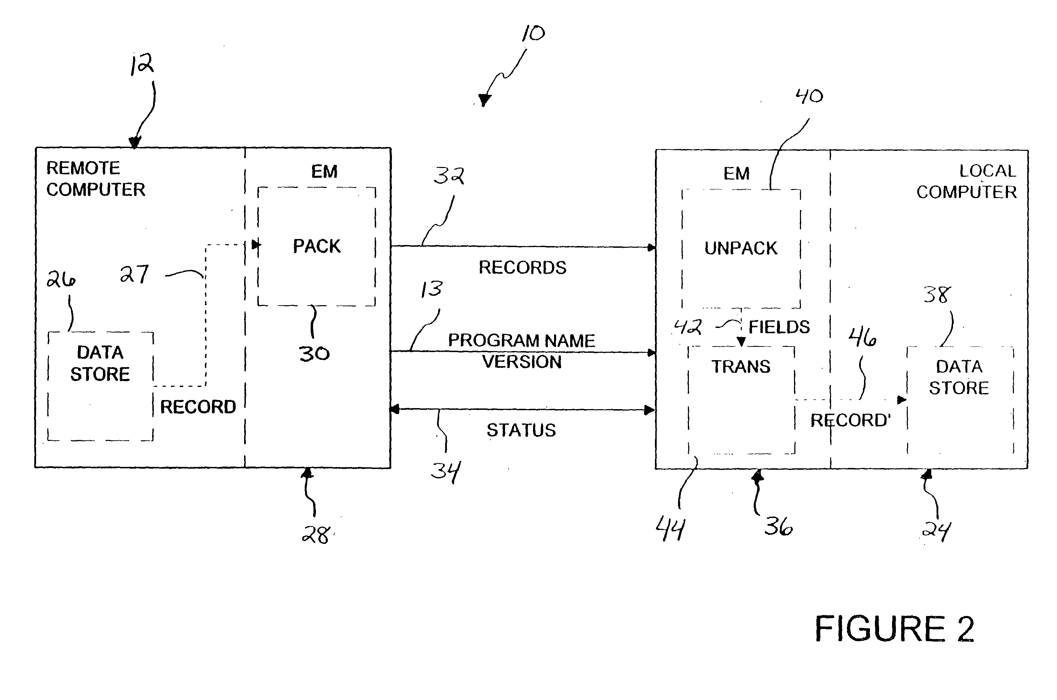

Figure 2 depicts a schematic representation of the data conversion apparatus according to a preferred embodiment of the invention. The system 10 includes a remote computer 12 having a dedicated enterprise manager 28, and a local computer 24 having a dedicated enterprise manager 36, as shown. Remote computer 12 has a data storage unit 26 that includes a first relational database for storing data used and generated by the first version of the selected program. The first relational database is constructed in a manner conventional to the art (as adapted in connection with the teachings below) and comprises, e.g., a "flat" arrangement of data items having a spreadsheet-like format. For example, the arrangement can have a table-like configuration using record structures as the table rows.

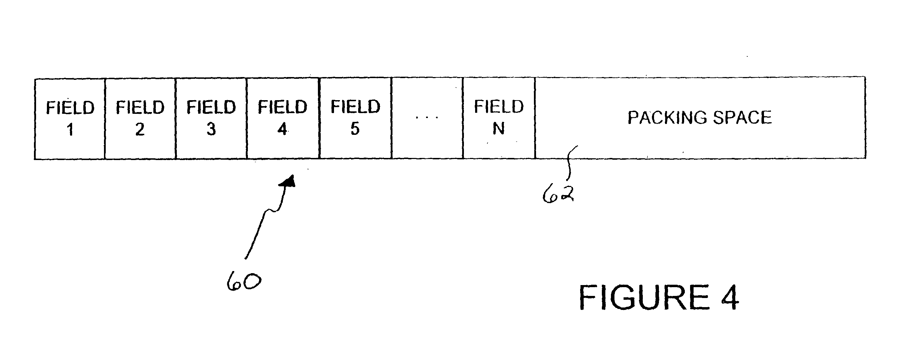

Data records contained within the relational database are preferably transferred from the data store 26 to the dedicated enterprise manager 28 which prepares those records for transfer to the local computer system 24. For this purpose, the enterprise manager 28 includes a packing element 30 for converting each record 27 from data store 26 to a generic data transfer format. In a preferred embodiment, that conversion includes padding each record with zero's, blanks, or other filler data, thereby padding the record to a designated record length, e.g., 256 bytes. Such a packed record 60 is depicted in Figure 4. The record 60 includes n fields, labeled FIELD 1, FIELD 2,... FIELD N, and further includes packing space 62. Those skilled in the art will of course appreciate that other conversions may include re-arrangement of fields within each data record, or collation of like data fields from all records.

Moreover, enterprise manager 28 transfers packed records 32, along with the signal 13 reflecting the name and version of the selected program, to the dedicated enterprise manager 36 of the local computer 24. That transfer is preferably performed electronically via network interconnect, bus or modem, but can also be accomplished via exchange of diskettes, tapes or other physical storage medium.

Illustrated local computer 24 includes a data storage unit 38, similar to the data storage unit 26 of the remote computer 12, for storing a second relational database containing a collection of data records in a format usable by that version of the selected program running in the second computer

The local enterprise manager 36 receives signal 13 from remote enterprise manager 28 and uses the information presented to determine how to convert data in records 32 for storage in data store 38. As further shown in the illustration, a status signal 34 can be communicated between the remote manager 28 and the local manager 36 for purposes of exchanging information regarding the status of any given data transfer and conversion.

The local enterprise manager 36 includes a disassembler, or unpacker, element 40 for stripping from records 32 extraneous information (e.g., filler) to reduce those records to their fundamental components, or fields 42, as described above.

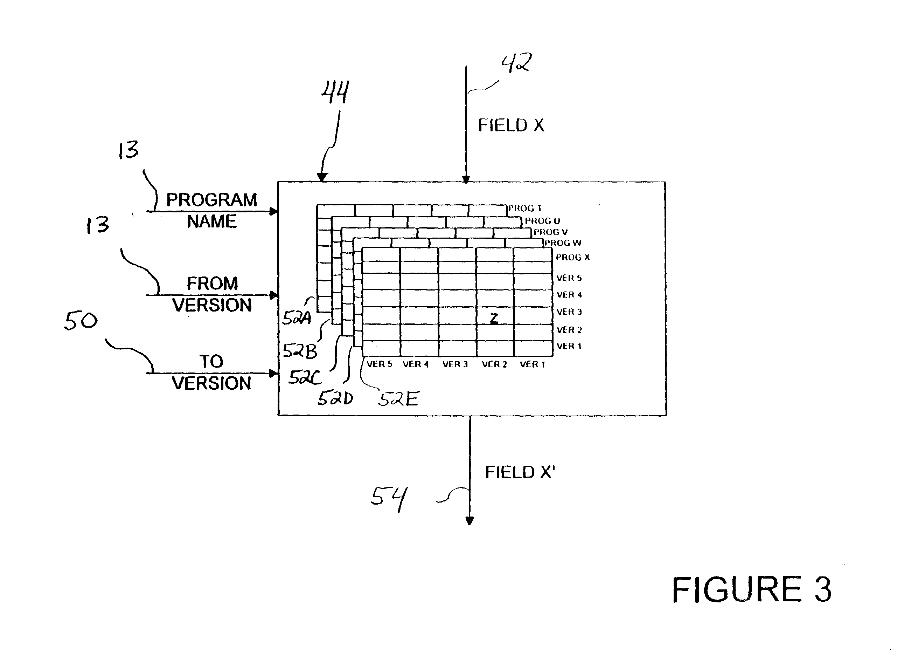

A conversion element or translator 44 translates each such field 42 into a format compatible with the version of the selected computer program resident on the local computer. The fields, once converted, are collated into records 46 and stored within the second relational database within data storage unit 38. The conversion of record 32 into a record 46 compatible with the second computer program version, can be more fully understood with reference to Figure 3.

It will further be appreciated, that although Figure 2 illustrates the local manager 36 as having the disassembler 40 and the translator 44, and the remote manager 28 as having the packer 30, each manager can include a packer 30, disassembler 40 and translator 44 -- thus, facilitating conversions in both directions.

Figure 3 depicts the translator 44 of Figure 2 according to a preferred embodiment of the invention. The translator 44 includes a collection of table elements 52A-52E. Each table corresponds to a selected program for which transferred data is to be converted and includes entries that are indexed by the FROM version signal 13 and the TO version signal 50. Each entry stores the name (or address) of a procedure-representative signal representative of a procedure that converts information stored within field 42 sent to and received by the disassembler 40 into information contained within field 54 that is compatible with the local version of the computer program. With respect to the example given above, where the FROM version signal 13 represents *version 2.0* of a computer program and the TO version signal represents *version 3.0*, the location within a selected table element corresponds to table entry Z, as illustrated.

Referring to the drawing, entry Z preferably stores the name or address of a selected conversion subroutine for converting each field 42 into field 54. Execution of subroutines via identification of their respective software names or addresses is known in the art and need not be described here. Such a conversion subroutine may, for example, convert a French franc-based amount contained in a data field used by the first version of the program (on remote computer system 28) to a German deutschemark-based amount for use by the second version of the program (on the local computer system 24).

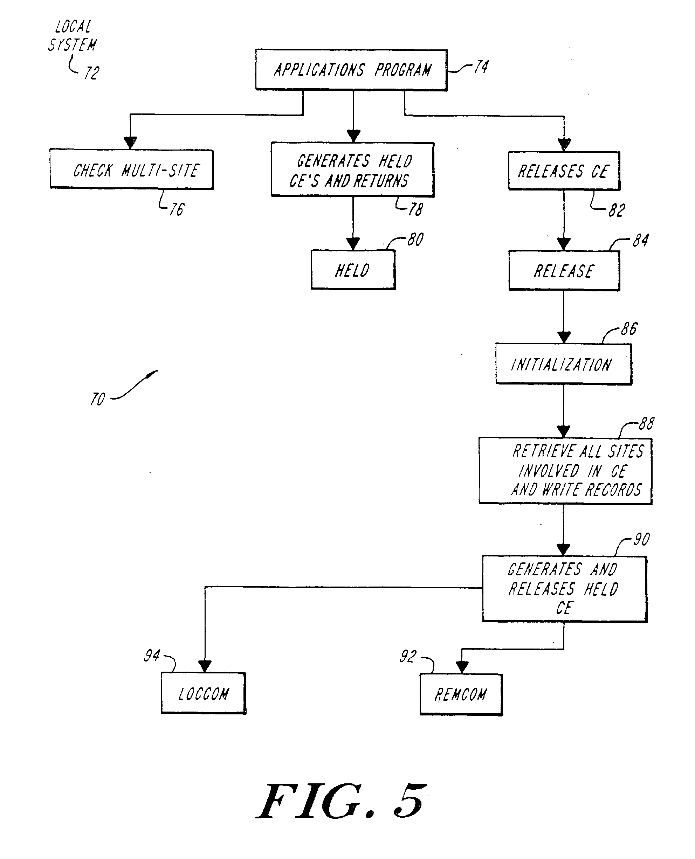

Figures 5, 6 and 7 are flowcharts showing the transfer of information between the local and remote computer systems (12, 24, Figure 1), as well as the invocation of individual processor programs, by a preferred system for conversion of transferred data according to the invention.

Referring to Figure 5, in step 74, applications program 72 executing on local system 72 performs several steps, including checking whether the application is "multi-site" 76, generating a communication entry (CE) signal 78, and releasing a held CE 82. In step 76, the local system processor invokes the application program 74 to determine whether the application needs to transfer data between "sites" (e.g., between local or remote databases). In one mode, if the application does not need to transfer data, the processor discontinues executing the applications program. However, if the processor determines that the application needs to transfer data, it generates a CE number (see step 78) and returns to the application program its identity. Step 80 stores the CE signal generated in step 78 pending identification of the associated data to be transferred. Once the processor identifies the data, the CE signal and the corresponding data are "tied" together, e.g., the application associates the generated CE number with the data.

With further reference to step 80, the local system 72 stores the generated CE signal in a general communications file (GENCOM). The general GENCOM file alerts the application that data is to be transferred from the local system 72 to another yet undesignated site. Thus, once the system identifies the specific site to which data is to be transferred, the system generates a specific CE corresponding to that site. For example, if the data transfer is to occur between remote databases, the system generates a remote communications CE (REMCOM) for that transfer. Conversely, if the data transfer is to occur between local databases, the system generates a local communications CE (LOCCOM). Although the illustrated flowcharts depict the transfer of data between a local and remote system, the illustrated steps are similarly applicable to the transfer of data between resident databases of a single system.

During the transfer of data to the remote system 102, the local system generates a REMCOM CE corresponding to the transfer of data to the remote site. The application attaches the CE to the data transferred between sites. However, the data transferred with the REMCOM CE is a copy of the data associated with the CE located in GENCOM, and not the original data associated with the GENCOM CE.

In step 82, the CE generated in step 78 is released via a call to GENCOM (see step 84). Then, in steps 86 and 88, the processing unit of the remote system processor calls a selected initialization program, which checks the various target systems located in the applications source history file to identify all the "sites" involved in the data transfer.

Further in accord with the above description, steps 86 through 90 create the CE's and mark or denote the data to be transferred with a corresponding transfer number, as described above. Step 88 then actuates step 90 by requesting step 90 to preferably write the CE's associated with the data to the local communications processor and from the remote communications processor. It will be appreciated that step 88 is program/FROM/TO signal specific, and that the step is synonymous with the data flow between the data storage unit 26 and the packer 30 of Figure 2.

Once step 88 calls the data records, step 90 generates either a local or remote CE and stores the CE as "held" (see step 80) during the initial record call. The processor then creates a copy of the data and marks it with the appropriate CE number. Subsequently, the CE is released upon any subsequent call to the local processor. This sequence of steps ensures that the system locates and marks the appropriate data with the correct CE number, and that the data can be identified for transfer to the remote system.

Preferably, step 90 performs the foregoing call functions. First, the processor generates the remote CE and stores the CE as "held" (see step 80). Then, secondly, a subsequent call releases the held CE, signifying that the corresponding transfer data has been located and marked. In step 90, the system generates a LOCCOM or REMCOM record (see steps 92,94) depending upon whether data is being transferred between local databases or remote databases. Those of ordinary skill will also understand that since centralized distribution requires that the local processor generate only remote CE's, the source data files are at system-level and, thus, already exist locally.

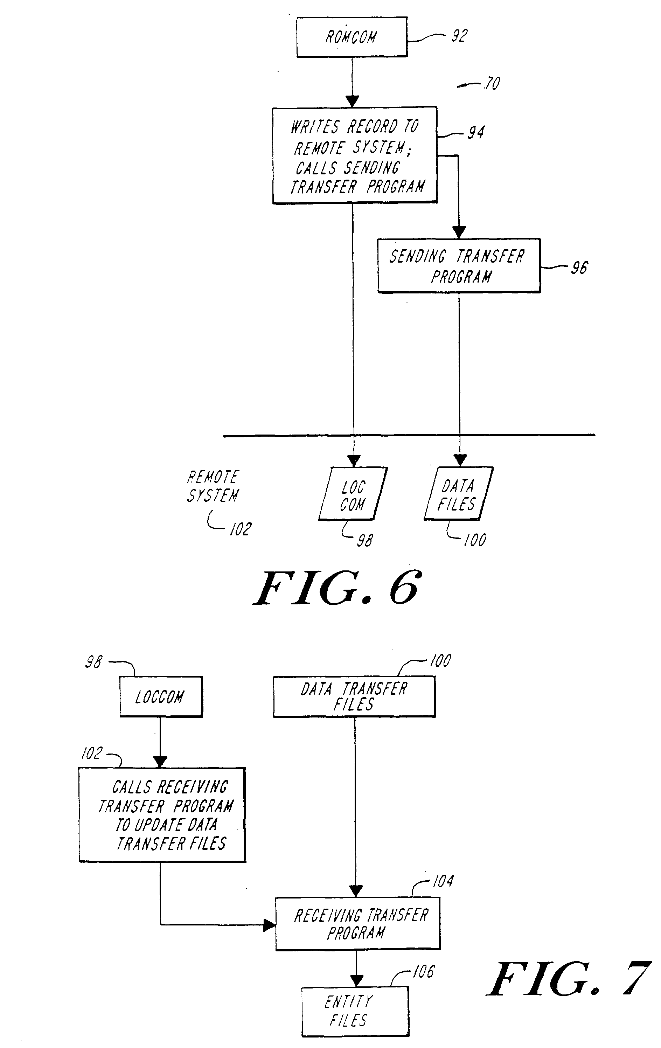

Figure 6 depicts a continuation of the flowchart of Figure 5 detailing the processing steps performed on a REMCOM record. Steps 92-100 represent the transfer of data between the local and remote computers illustrated in Figures 1 and 2. Further, the steps preferably depend upon the program/FROM/TO signals 13,13,50. In step 94, the local system 72 processes the REMCOM record transferred from the data storage unit 26 to the packer 30, and writes a LOCCOM record to the remote system 102. The LOCCOM record sent by the local system 72 instructs the remote system to convert and upload the data. Additionally, step 94 invokes the sending transfer program 96 for transferring the LOCCOM record to a remote data transfer file100, where it is preferably stored in separately allocated memory storage space.

The steps 102-106 of Figure 7 illustrate the transfer and receipt of data by the remote system 102. The remote system 102, once the LOCCOM record is received, invokes the receiving transfer program 102 to update the data transfer files 100 into system or entity files 106. Those of ordinary skill will appreciate that this transfer corresponds to flow of data between the translator 44 and the data storage unit 38 of Figure 2.

It will also be appreciated that although the present invention has been described with regard to the conversion of data transferred between two remote systems, the principles described herein are similarly applicable to the consolidation of data from multiple databases.

A still more complete understanding of the structure and operation of a preferred system according to the invention may be attained by reference to the software listings provided in the Appendices A, B and C copies of which are furnished to the European Patent Office (EPO) with this patent application. The entire contents of Appendices A, B and C are to be considered as forming part of the content of this patent application as filed.

The Appendices are titled "Appendix (or B or C) to Patent Application for improved method and apparatus for conversion of transferred digital date".

The software communication tools referred to in the listings can be any of several commercially available and commonly know such tools. Preferred such tools are designed by the assignee hereof. Those skilled in the art will appreciated that the listed programs are also used in conjunction with other software and hardware tools (e.g., operating systems and modems) commonly available and known to those of ordinary skill in the art.

The foregoing describes a preferred system for converting data for use by two or more computer programs. Those skilled in the art will appreciate that the embodiment described above is by way of example only, and that other embodiments incorporating modifications thereto fall within the scope of the invention. Thus, as noted above, whereas the illustrated embodiment herein is directed to the conversion of data transferred between two versions of a given program, those teachings are equally applicable to the conversion of data transferred between any relational databases, or the like.

Appendix A constitutes computer software listings comprising the desing and code of a preferred system for conversion of transferred data according to the invention.

Appendix B constitutes software listings of an exemplary system for conversion of transferred data according to invention. Those listings pertain to the flowcharts of Figures 5 through 7 as follows: the discussion of the software program MMU360 pertains to step 74 of Figure 5; the discussion of NEWORD & RTVTGS from the program MMU360 pertains to step 76; the discussion of subroutines NEWORD & RTVGCE from the program MMU360 pertains to step 78; the discussion of subroutine PRCORD from MMU360 pertains to step 82; the discussion of the program MMC460 pertains to steps 86, 88 and 90; the discussion of the program MMC040 pertains to steps 92 and 94; the discussion of the program MMC462 pertains to step 96; the discussion of program MMC020 pertains to steps 98 and 102; the discussion of program MMC020 pertains to step 102; and the discussion of program MMC464 pertains to step 104.

Appendix C depicts the layout of the file containing the table elements 52A-52E, as well as an audit log corresponding to the exemplary system of Appendix B.

## Claims

1. Data conversion apparatus for use with a digital data processing system of the type having first file storage means (26) for storing a plurality of digital records representing information used by a first selected computer program,
second file storage means (38) capable of storing a second plurality of digital records representing at least a portion of said information for use by a second selected computer program,
said data conversion apparatus comprising
file management means (28, 36), coupled to said first and second file storage means (26,38), for generating and storing a plurality of digital records for use by said second selected computer program, wherein each such generated digital record includes at least selected information from a corresponding digital record of said first computer program,
said file management means includes conversion means for generating said digital records for use by said second computer program by converting at least selected information contained in the corresponding digital record of said first computer program wherein said conversion is a function of (i) the identity of said first selected computer program, and (ii) the identity of said second selected computer program,
the data conversion apparatus being **characterized in that** said conversion means is adapted to generate said digital records for use by said second computer program converting said corresponding digital records of said first computer program on a field-by-field basis, the conversion means comprising;
a) at least one table entry means (44) for storing a procedure-representative signal representative of a procedure for converting information contained in each of at least selected fields of a digital record of said first selected program to information contained in at least one corresponding component of a digital record for use by said second selected program, and
b) execution means, coupled to said at least one table entry means (44), responsive to said procedure-representative signal for executing said procedure to perform said conversion; and, optionally,
c) said conversion means comprises a plurality of said table entry means (52A-52E), each accessible in accord with identities of said computer programs between which said procedure converts the information contained in said components of said digital records (40), and
d) said conversion means comprises means for accessing a selected said table entry means (44) based on identities of said selected computer programs.

2. Data conversion apparatus according to claim 1 for use with a digital data processing system of the type having first file storage means (26) for storing a first relational database, said first relational database including a plurality of digital records representing information used by a first selected version of a computer program, second file storage means (38) capable of storing a second relational database, said second relational database including a plurality of digital records representing at least a portion of said information for use by a second selected version of said computer program, said data conversion apparatus comprising
a) file management means (28, 36), coupled to said first and second file storage means (26,38), for generating and storing in said second relational database a plurality of digital records for use by said second selected version of said computer program, wherein each such generated digital record includes at least selected information from a corresponding digital record of said first relational database,
b) said file management means includes conversion means for generating said digital records for storage in said second relational database by converting at least selected information contained in the corresponding digital record of said first relational database wherein said conversion is a function of (i) the identity of said first selected version of said computer program, and (ii) the identity of said second selected version of said computer program.

3. Data conversion apparatus according to claim 2, wherein said conversion means comprises
a) at least one table entry means (44) for storing a procedure-representative signal representative of a procedure for converting information contained in at least a component of a digital record of said first relational database to information contained in at least one corresponding component of a digital record of said second relational database, and
b) execution means, coupled to said at least one table entry means (44), responsive to said procedure-representative signal for executing said procedure to perform said conversion; and, optionally,
c) said conversion means comprises a plurality of said table entry means (52A-52E), each accessible in accord with identities of the versions of said computer program between which said procedure converts the information contained in said components of said digital records (40), and
d) said execution means comprises means for accessing a selected said table entry means (44) based on identities of said selected versions of said computer program with which said first and second relational database are associated.

4. Data conversion apparatus according to claim 3, wherein A. at least one said entry means comprises means for storing as said procedure-representative signal an identity of a subroutine of steps for converting information contained in at least a component of said digital record of said first relational database to information contained in at least one corresponding component of said digital record of said second relational database, and B. said execution means comprises means for executing said subroutine for executing said procedure to perform said conversion, and, optionally, C. wherein said execution means further comprises means for configuring a central processing unit coupled with said second file storage means (38) to execute said subroutine for executing said procedure to perform said conversion.

5. Data conversion apparatus according to any of the claims 2 to 4 wherein said first and second file storage means (26,38) are disposed remotely from one another and wherein said file management means comprises
a) data transfer means coupled to said first file storage means for converting a said plurality of digital records of said first relational database to a standard file transfer format for transfer to said conversion means,
b) said conversion means includes disassembler means responsive to receipt of said plurality of digital records of said first relational database in said standard file transfer format for identifying information contained in at least selected components of said digital records thereof.

6. A method of data conversion for use with a digital data processing system of the type having first file storage means (26) for storing a first plurality of digital records representing information used by a first selected computer program, second file storage means (38) capable of storing a second plurality of digital records representing at least a portion of said information for use by a second selected computer program, said data conversion method comprising
a) a file management step for generating and storing a plurality of digital records for use by said second selected computer program, wherein each such generated digital record includes at least selected information from a corresponding digital record of said first computer program,
b) said file management step including a conversion step for generating said digital records for use by said second computer program by converting at least selected information contained in the corresponding digital record of said first computer program wherein said conversion is a function of (i) the identity of said first selected computer program, and (ii) the identity of said second selected computer program, the method of data conversion being **characterized in that**
the conversion step includes generating said digital records for use by said second computer program converting said corresponding digital records of said first computer program on a field-by-field basis, and further **characterized by** the steps of
c) storing in a table entry an identity of a subroutine of steps for converting information contained each of at least selected fields of said digital record of said first selected program to information contained in at least one corresponding component of said digital record of said second selected program, and
d) said execution step comprises means for executing said subroutine for executing said procedure to perform said conversion; and, optionally,
e) wherein said execution step further comprises the step of configuring a central processing unit to execute a subroutine identified in one of said table entries to perform a conversion.

7. A method of data conversion according to claim 6 for use with a digital data processing system of the type having first file storage means (26) for storing a first relational database, said first relational database including a plurality of digital records representing information used by a first selected version of a computer program, second file storage means (38) capable of storing a second relational database, said second relational database including a plurality of digital records representing at least a portion of said information for use by a second selected version of said computer program, said data conversion method comprising
a) a file management step for generating and storing in said second relational database a plurality of digital records for use by said second selected version of said computer program, wherein each such generated digital record includes at least selected information from a corresponding digital record of said first relational database,
b) said file management step including a conversion step for generating said digital records for storage in said second relational database by converting at least selected information contained in the corresponding digital record of said first relational database, wherein said conversion is a function of (i) the identity of said first selected version of said computer program, and (ii) the identity of said second selected version of said computer program.

8. A data conversion method according to claim 7, comprising
a) a table-loading step for storing, in a table, at least one entry identifying a procedure for converting information contained in at least a component of a digital record of said first relational database to information contained in at least one corresponding component of a digital record of said second relational database, and
b) wherein, said conversion step includes the step of executing a procedure identified by a selected such table entry perform said conversion; and, optionally,
c) said table-loading step comprises the additional step of storing a plurality of said table entries, each accessible in accord with identities of the versions of said computer program between which said procedure converts the information contained in said components of said digital records; and
d) said executing step includes the step of accessing a selected said table entry means (44) based on identities of said selected versions of said computer program with which said first and second relational databases are associated.

9. A data conversion method according to claim 8, wherein
a) said table-loading step includes the step of storing, in at least one said table entry, and identity of a subroutine of steps for converting information contained in at least a component of said digital record of said first relational database to information contained in at least one corresponding component of said digital record of said second relational database, and
b) said execution step comprises means for executing said subroutine for executing said procedure to perform said conversion; and, optionally,
c) wherein said execution step further comprises the step of configuring a central processing unit to execute a subroutine identified in one of said table entries to perform a conversion.

10. Data conversion method according to claim 7 wherein said first and second file storage means (28, 38) are disposed remotely from one another, and wherein said file management step comprises
a) a data transfer step for converting said plurality of digital records of said first relational database to a standard file transfer format for transfer to said conversion means,
b) said conversion step includes disassembler means responsive to receipt of said plurality of digital records of said first relational database in said standard file transfer format for identifying information contained in at least selected components of said digital records thereof.

## Patentansprüche

1. Datenkonvertierungsgerät zum Verwenden mit einem digitalen Datenverarbeitungssystem des Typs mit einer ersten Dateispeichereinrichtung (26) zum Speichern einer Vielzahl digitaler Datensätze besitzt, welche Information repräsentieren, die von einem ersten ausgewählten Computerprogramm verwendet wird,
einer zweiten Dateispeichereinrichtung (38), die eine zweite Vielzahl digitaler Datensätze speichern kann, die wenigstens einen Teil der Information zur Verwendung durch ein zweites ausgewähltes Computerprogramm repräsentieren,
wobei das Datenkonvertierungsgerät aufweist:
eine Dateiverwaltungseinrichtung (28, 36), die mit der ersten und zweiten Dateispeicherungseinrichtung (26, 38) verbunden ist, um eine Vielzahl digitaler Datensätze zur Verwendung durch das zweite ausgewählte Computerprogramm zu erzeugen und zu speichern, wobei jeder derartig erzeugte digitale Datensatz wenigstens ausgewählte Information aus einem entsprechenden digitalen Datensatz des ersten Computerprogramms enthält,
wobei die Dateiverwaltungseinrichtung eine Konvertierungseinrichtung enthält, um die digitalen Datensätze zur Verwendung durch das zweite Computerprogramm durch Konvertieren wenigstens ausgewählter Information zu erzeugen, die in dem entsprechenden digitalen Datensatz des ersten Computerprogramms enthalten ist, wobei die Konvertierung eine Funktion von (i) der Identität des ersten ausgewählten Computerprogramms ist, und (ii) der Identität des zweiten ausgewählten Computerprogramms ist,
wobei das Datenkonvertierungsgerät **dadurch gekennzeichnet ist, daß** die Konvertierungseinrichtung dafür angepaßt ist, die digitalen Datensätze zur Verwendung durch das zweite Computerprogramm unter Konvertierung der entsprechenden digitalen Datensätze des ersten Computerprogramms auf einer Feld-zu-Feld-Basis zu erzeugen, wobei die Konvertierungseinrichtung aufweist:
a) wenigstens eine Tabelleneintragseinrichtung (44) zum Speichern eines Prozedur-repräsentierenden Signals, das eine Prozedur zur Konvertierung von Information, die in jedem von wenigstens ausgewählten Feldern eines digitalen Datensatzes des ersten ausgewählten Programms enthalten ist, in Information repräsentiert, die in wenigstens einer entsprechenden Komponente eines digitalen Datensatzes zur Verwendung durch das zweite ausgewählte Programm enthalten ist, und
b) eine Ausführungseinrichtung, welche mit der wenigstens einen Tabelleneintragseinrichtung (44) verbunden ist, und auf das Prozedur-repräsentierende Signal reagiert, indem sie die Prozedur ausführt, um die Konvertierung durchzuführen; und optional,
c) die Konvertierungseinrichtung eine Vielzahl von den Tabelleneintragseinrichtungen (52A-52B) aufweist, wovon auf jede anhand von Identitäten der Computerprogramme, zwischen welchen die Prozedur die in den Komponenten der digitalen Datensätze (40) enthaltene Information konvertiert, zugegriffen werden kann, und
d) die Konvertierungseinrichtung eine Einrichtung aufweist zum Zugreifen auf eine der auf Basis von Identitäten der ausgewählten Computerprogramme ausgewählte Tabelleneintragseinrichtung (44).

2. Datenkonvertierungsgerät gemäß Anspruch 1 zur Verwendung mit einem digitalen Datenverarbeitungssystem des Typs mit einer ersten Dateispeichereinrichtung (26) zum Speichern einer ersten relationalen Datenbank, wobei die erste relationale Datenbank eine Vielzahl digitaler Datensätze enthält, welche Information repräsentieren, die von einer ersten ausgewählten Version eines Computerprogramms verwendet wird, und mit einer zweiten Dateispeichereinrichtung (38), welche eine zweite relationale Datenbank speichern kann, wobei die zweite relationale Datenbank eine Vielzahl digitaler Datensätze enthält, welche wenigstens einen Teil der Information zur Verwendung durch die zweite ausgewählte Version des Computerprogramms repräsentiert, wobei das Datenkonvertierungsgerät aufweist eine Dateiverwaltungseinrichtung (28, 36), die mit der ersten und zweiten Dateispeicherungseinrichtung (26, 38) verbunden ist, um in der zweiten relationalen Datenbank eine Vielzahl digitaler Datensätze zur Verwendung durch die zweite ausgewählte Version des Computerprogramms zu erzeugen und zu speichern, wobei jeder derartig erzeugte digitale Datensatz wenigstens ausgewählte Information von einem entsprechenden digitalen Datensatz der ersten relationalen Datenbank enthält,
b) wobei die Datenverwaltungseinrichtung eine Konvertierungseinrichtung zum Erzeugen der digitalen Datensätze zur Speicherung in der zweiten relationalen Datenbank durch Konvertieren wenigstens ausgewählter Information, die in dem entsprechenden digitalen Datensatz der ersten relationalen Datenbank enthalten ist, enthält, wobei die Konvertierung eine Funktion von (i) der Identität der ersten ausgewählten Version des Computerprogramms ist, und (ii) der Identität der zweiten ausgewählten Version des Computerprogramms ist.

3. Datenkonvertierungsgerät nach Anspruch 2, wobei die Konvertierungseinrichtung aufweist:
a) wenigstens eine Tabelleneintragseinrichtung (44) zum Speichern eines Prozedur-repräsentierenden Signals, das eine Prozedur zum Konvertieren von Information, die in wenigstens einer Komponente eines digitalen Datensatzes der ersten relationalen Datenbank enthalten ist, in Information repräsentiert, die in wenigstens einer entsprechenden Komponente eines digitalen Datensatzes der zweiten relationalen Datenbank enthalten ist, und
b) eine Ausführungseinrichtung, die mit der wenigstens einen Tabelleneintragseinrichtung (44) verbunden ist, die auf das Prozedur-repräsentierende Signal reagiert, indem sie die Prozedur ausführt, um die Konvertierung durchzuführen; und, optional,
c) die Konvertierungseinrichtung eine Vielzahl von den Tabelleneintragseinrichtungen (52A-52E) enthält, wovon auf jede gemäß Identitäten der Versionen des Computerprogramms, zwischen welchen die Prozedur die in den Komponenten der digitalen Datensätze (40) enthaltene Information konvertiert, zugegriffen werden kann, und
d) die Ausführungseinrichtung eine Einrichtung zum Zugreifen auf eine ausgewählte Tabelleneintragseinrichtung (44) auf der Basis von Identitäten der ausgewählten Versionen des Computerprogramms aufweist, welchem die erste und zweite relationale Datenbank zugeordnet sind.

4. Datenkonvertierungsgerät nach Anspruch 3, wobei: A. wenigstens eine von den Eintragseinrichtungen eine Einrichtung aufweist, um als das Prozedur-repräsentierende Signal eine Identität einer Subroutine von Schritten zum Konvertieren von in wenigstens einer Komponente des digitalen Datensatzes der ersten relationalen Datenbank enthaltener Information, in Information, die in wenigstens einer entsprechenden Komponente des digitalen Datensatzes der zweiten relationalen Datenbank enthalten ist, zu speichern, und B. wobei die Ausführungseinrichtung eine Einrichtung aufweist, um die Subroutine zur Durchführung der Prozedur auszuführen, um die Konvertierung durchzuführen; und optional, C. wobei die Ausführungseinrichtung ferner eine Einrichtung zum Konfigurieren einer mit der zweiten Dateispeicherungseinrichtung (38) verbundenen Zentralverarbeitungseinheit aufweist, um die Subroutine zur Durchführung der Prozedur auszuführen, um die Konvertierung durchzuführen.

5. Datenkonvertierungsgerät nach einem der Ansprüche 2 bis 4, wobei die erste und zweite Dateispeicherungseinrichtung (26, 38) voneinander entfernt angeordnet sind, und wobei die Dateiverwaltungseinrichtung aufweist;
a) eine Datenübertragungseinrichtung, die mit der ersten Dateispeicherungseinrichtung verbunden ist, um die Vielzahl digitaler Datensätze der ersten relationalen Datenbank in ein Standard-Dateiübertragungsformat zur Übertragung an die Konvertierungseinrichtung zu konvertieren,
b) wobei die Konvertierungseinrichtung eine Disassemblereinrichtung enthält, die auf den Empfang der Vielzahl digitaler Datensätze der ersten relationalen Datenbank in dem Standard-Dateiübertragungsformat reagiert, indem sie die in wenigstens ausgewählten Komponenten der digitalen Datensätze davon enthaltene Information identifiziert.

6. Datenkonvertierungsverfahren zum Verwenden mit einem digitalen Datenverarbeitungssystem des Typs mit einer ersten Dateispeichereinrichtung (26) zum Speichern einer ersten Vielzahl digitaler Datensätze, welche Information repräsentieren, die von einem ersten ausgewählten Computerprogramm genutzt wird, und mit einer zweiten Dateispeichereinrichtung (38), welche eine zweite Vielzahl digitaler Datensätze speichern kann, welche wenigstens einen Teil der Information zur Verwendung durch ein zweites ausgewähltes Computerprogramm repräsentieren, wobei das Datenkonvertierungsverfahren aufweist:
a) einen Dateiverwaltungsschritt zum Erzeugen und Speichern einer Vielzahl digitaler Datensätze zur Verwendung durch das zweite ausgewählte Computerprogramm, wobei jeder derartig erzeugte digitale Datensatz wenigstens ausgewählte Information von einem entsprechenden digitalen Datensatz des ersten Computerprogramms enthält,
b) wobei der Dateiverwaltungsschritt einen Konvertierungsschritt enthält, um die digitalen Datensätze zur Verwendung durch das zweite Computerprogramm durch Konvertieren wenigstens ausgewählter Information zu erzeugen, die in dem entsprechenden digitalen Datensatz des ersten Computerprogramms enthalten ist, wobei die Konvertierung eine Funktion von (i) der Identität des ersten ausgewählten Computerprogramms ist, und (ii) der Identität des zweiten ausgewählten Computerprogramms ist, wobei das Verfahren der Datenkonvertierung **dadurch gekennzeichnet ist, daß**
der Konvertierungsschritt das Erzeugen der digitalen Datensätze zur Verwendung durch das zweite Computerprogramm unter Konvertierung der entsprechenden digitalen Datensätze des ersten Computerprogramms auf einer Feld-zu-Feld-Basis beinhaltet, und ferner durch die Schritte gekennzeichnet ist:
c) Speichern in einem Tabelleneintrag einer Identität einer Subroutine von Schritten zum Konvertieren von Information, die in jedem von wenigstens ausgewählten Feldern des digitalen Datensatzes des ersten ausgewählten Programms enthalten ist, in Information, die in wenigstens einer entsprechenden Komponente eines digitalen Datensatzes des zweiten ausgewählten Programms enthalten ist, und
d) daß der Ausführungsschritt eine Ausführungseinrichtung enthält, um die Subroutine zur Durchführung der Prozedur auszuführen, um die Konvertierung durchzuführen; und optional
e) wobei der Ausführungsschritt ferner den Schritt der Konfiguration einer zentralen Verarbeitungseinrichtung aufweist, um eine in einem der Tabelleneinträge identifizierte Subroutine auszuführen, um eine Konvertierung durchzuführen.

7. Datenkonvertierungsverfahren gemäß Anspruch 6 zur Verwendung mit einem digitalen Datenverarbeitungssystem des Typs mit einer ersten Dateispeichereinrichtung (26) zum Speichern einer ersten relationalen Datenbank, wobei die erste relationale Datenbank eine Vielzahl digitaler Datensätze enthält, welche Information repräsentieren, die von einer ersten ausgewählten Version eines Computerprogramms verwendet wird, und mit einer zweiten Dateispeichereinrichtung (38), welche eine zweite relationale Datenbank speichern kann, wobei die zweite relationale Datenbank eine Vielzahl digitaler Datensätze enthält, welche wenigstens einen Teil der Information zur Verwendung durch die zweite ausgewählte Version des Computerprogramms repräsentiert, wobei das Datenkonvertierungsverfahren aufweist:
a) einen Dateiverwaltungsschritt, zum Erzeugen und Speichern in der zweiten relationalen Datenbank einer Vielzahl digitaler Datensätze zur Verwendung durch die zweite ausgewählte Version des Computerprogramms, wobei jeder derartig erzeugte digitale Datensatz wenigstens ausgewählte Information von einem entsprechenden digitalen Datensatz der ersten relationalen Datenbank enthält,
b) wobei der Datenverwaltungsschritt einen Konvertierungsschritt zum Erzeugen der digitalen Datensätze zur Speicherung in der zweiten relationalen Datenbank durch Konvertieren wenigstens ausgewählter Information, die in dem entsprechenden digitalen Datensatz der ersten relationalen Datenbank enthalten ist, enthält, wobei die Konvertierung eine Funktion von (i) der Identität der ersten ausgewählten Version des Computerprogramms ist, und (ii) der Identität der zweiten ausgewählten Version des Computerprogramms ist.

8. Datenkonvertierungsverfahren nach Anspruch 7, aufweisend:
a) einen Tabellenladeschritt, um in einer Tabelle wenigstens einen eine Prozedur identifizierenden Eintrag zu speichern, um Information, die in wenigstens einer Komponente eines digitalen Datensatzes der ersten relationalen Datenbank enthalten ist, in Information zu konvertieren, die in wenigstens einer entsprechenden Komponente eines digitalen Datensatzes der zweiten relationalen Datenbank enthalten ist, und
b) der Konvertierungsschritt den Schritt der Ausführung einer Prozedur enthält, die durch einen ausgewählten derartigen Tabelleneintrag identifiziert ist, um die Konvertierung durchzuführen; und optional
c) der Tabellenladeschritt den zusätzlichen Schritt des Speicherns einer Vielzahl von Tabelleneinträgen umfasst, jeder verfügbar in Übereinstimmung mit Identitäten der Versionen des Computerprogramms, zwischen denen die Prozedur die in den Komponenten der digitalen Einträge enthaltene Information konvertiert, und
d) der Ausführungsschritt den Schritt des Zugriffs auf die ausgewählte Tabelleneintragseinrichtung (44) einschließt basierend auf Identitäten der ausgewählten Versionen des Computerprogramms mit denen die ersten und zweiten relationalen Datenbanken einander zugeordnet sind.

9. Datenkonvertierungsverfahren nach Anspruch 8, wobei:
a) der Tabellenladeschritt den Schritt der Speicherung, in wenigstens einem Tabelleneintrag, einer Identität einer Subroutine von Schritten aufweist, um in wenigstens einer Komponente des digitalen Datensatzes der ersten relationalen Datenbank enthaltene Information in Information zu konvertieren, die in wenigstens einer entsprechenden Komponente des digitalen Datensatzes der zweiten relationalen Datenbank enthalten ist,
b) der Ausführungsschritt eine Einrichtung aufweist, um die Subroutine zur Durchführung der Prozedur auszuführen, um die Konvertierung durchzuführen; und optional
c) der Ausführungsschritt ferner den Schritt der Konfiguration einer Zentralverarbeitungseinheit aufweist, um eine in einem der Tabelleneinträge identifizierte Subroutine auszuführen, um eine Konvertierung durchzuführen.

10. Datenkonvertierungsverfahren nach Anspruch 7, wobei die erste und zweite Dateispeicherungseinrichtung (26, 38) voneinander entfernt angeordnet sind und wobei der Dateiverwaltungsschritt aufweist:
a) einen Datenübertragungsschritt, um die Vielzahl digitaler Datensätze der ersten relationalen Datenbank in ein Standard-Dateiübertragungsformat zur Übertragung an die Konvertierungseinrichtung zu konvertieren,
b) wobei der Konvertierungsschritt eine Disassemblereinrichtung enthält, die auf den Empfang der Vielzahl digitaler Datensätze der ersten relationalen Datenbank in dem Standard-Dateiübertragungsformat reagiert, indem sie die Information identifiziert, die in wenigstens ausgewählten Komponenten von dessen digitalen Datensätzen enthalten ist.

## Revendications

1. Appareil de conversion de données destiné à être utilisé avec un système de traitement de données numériques du type ayant un premier moyen de stockage de fichiers (26) permettant de stocker une pluralité d'enregistrements numériques représentant les informations utilisées par un premier programme informatique sélectionné,
un deuxième moyen de stockage de fichiers (38) en mesure de stocker une deuxième pluralité d'enregistrements numériques représentant au moins une partie desdites informations destinées à être utilisées par un deuxième programme informatique sélectionné,
ledit appareil de conversion de données comprenant :
des moyens de gestion des fichiers (28, 36) couplés auxdits premier et deuxième moyens de stockage de fichiers (26, 38), permettant de générer et de stocker une pluralité d'enregistrements numériques destinés à être utilisés par ledit deuxième programme informatique sélectionné, dans lequel chaque enregistrement numérique généré de ce type inclut au moins les informations sélectionnées provenant d'un enregistrement numérique correspondant dudit premier programme informatique,
lesdits moyens de gestion des fichiers incluent des moyens de conversion permettant de générer lesdits enregistrements numériques destinés à être utilisés par ledit deuxième programme informatique en convertissant au moins les informations sélectionnées contenues dans l'enregistrement numérique correspondant dudit premier programme informatique, dans lequel ladite conversion est fonction de (i) l'identité dudit premier programme informatique sélectionné, et (ii) l'identité dudit deuxième programme informatique sélectionné,
l'appareil de conversion de données étant **caractérisé en ce que** lesdits moyens de conversion sont conçus pour générer lesdits enregistrements numériques destinés à être utilisés par ledit deuxième programme informatique convertissant lesdits enregistrements numériques correspondants dudit premier programme informatique sur une base champ par champ, les moyens de conversion comprenant :
a) au moins un moyen de table d'entrées (44) permettant de stocker un signal représentatif de procédure, représentatif d'une procédure permettant de convertir les informations contenues dans chaque champ d'au moins les champs sélectionnés d'un enregistrement numérique dudit premier programme sélectionné en informations contenues dans au moins un composant correspondant d'un enregistrement numérique destiné à être utilisé par ledit deuxième programme sélectionné, et
b) un moyen d'exécution, couplé à au moins un moyen de table d'entrées (44), sensible audit signal représentatif de procédure permettant d'exécuter ladite procédure afin de réaliser ladite conversion ; et, facultativement,
c) ledit moyen de conversion comprend une pluralité de dits moyens de table d'entrées (52A à 52E), chacun étant accessible en fonction des identités desdits programmes informatiques entre lesquels ladite procédure convertit les informations contenues dans lesdits composants desdits enregistrements numériques (40), et
d) ledit moyen de conversion comprend un moyen permettant d'accéder à un dit moyen de table d'entrées (44) sur la base des identités desdits programmes informatiques sélectionnés.

2. Appareil de conversion de données selon la revendication 1, destiné à être utilisé avec un système de traitement de données numériques du type ayant un premier moyen de stockage de fichiers (26) permettant de stocker une première base de données relationnelle, ladite première base de données relationnelle incluant une pluralité d'enregistrements numériques représentant les informations utilisées par une première version sélectionnée d'un programme informatique, un deuxième moyen de stockage de fichiers (38) en mesure de stocker une deuxième base de données relationnelle, ladite deuxième base de données relationnelle incluant une pluralité d'enregistrements numériques représentant au moins une partie desdites informations destinées à être utilisées par une deuxième version sélectionnée dudit programme informatique, ledit appareil de conversion de données comprenant :
a) des moyens de gestion de fichiers (28, 36) couplés auxdits premier et deuxième moyens de stockage de fichiers (26, 38), permettant de générer et de stocker dans ladite deuxième base de données relationnelle une pluralité d'enregistrements numériques destinés à être utilisés par ladite deuxième version sélectionnée dudit programme informatique, dans lequel chaque enregistrement numérique généré de ce type inclut au moins les informations sélectionnées provenant d'un enregistrement numérique correspondant de ladite première base de données relationnelle,
b) lesdits moyens de gestion de fichiers incluent un moyen de conversion permettant de générer lesdits enregistrements numériques à stocker dans ladite deuxième base de données relationnelle en convertissant au moins les informations sélectionnées contenues dans l'enregistrement numérique correspondant de ladite première base de données relationnelle, dans lequel ladite conversion est fonction de (i) l'identité de ladite première version sélectionnée dudit programme informatique, et (ii) l'identité de ladite deuxième version sélectionnée dudit programme informatique.

3. Appareil de conversion de données selon la revendication 2, dans lequel ledit moyens de conversion comprend :
a) au moins un moyen de table d'entrées (44) permettant de stocker un signal représentatif de procédure, représentatif d'une procédure permettant de convertir les informations contenues dans au moins un composant d'un enregistrement numérique de ladite première base de données relationnelle en informations contenues dans au moins un composant correspondant d'un enregistrement numérique de ladite deuxième base de données relationnelle, et
b) un moyen d'exécution, couplé à au moins un moyen de table d'entrées (44) sensible audit signal représentatif de procédure, permettant d'exécuter ladite procédure afin de réaliser ladite conversion ; et, facultativement,
c) ledit moyen de conversion comprend une pluralité de dits moyens de table d'entrées (52A à 52E), chacun étant accessible en fonction des identités des versions dudit programme informatique entre lesquelles ladite procédure convertit les informations contenues dans lesdits composants desdits enregistrements numériques (40), et
d) ledit moyens d'exécution comprend des moyens permettant d'accéder à un dit moyen de table d'entrées sélectionné (44) sur la base des identités desdites versions sélectionnées dudit programme informatique auquel sont associées lesdites première et deuxième bases de données relationnelles.

4. Appareil de conversion de données selon la revendication 3, dans lequel
A) au moins un dit moyen d'entrée comprend des moyens permettant de stocker, en tant que dit signal représentatif de procédure, une identité d'un sous-programme d'étapes permettant de convertir les informations contenues dans au moins un composant dudit enregistrement numérique de ladite première base de données relationnelle en informations contenues dans au moins un composant correspondant dudit enregistrement numérique de ladite deuxième base de données relationnelle, et
B) ledit moyen d'exécution comprend un moyen permettant d'exécuter ledit sous-programme destiné à exécuter ladite procédure afin de réaliser ladite conversion, et, facultativement,
C) dans lequel ledit moyen d'exécution comprend en outre un moyen permettant de configurer une unité centrale de traitement couplée audit deuxième moyen de stockage de fichiers (38) pour exécuter ledit sous-programme destiné à exécuter ladite procédure afin de réaliser ladite conversion.

5. Appareil de conversion de données selon l'une quelconque des revendications 2 à 4, dans lequel lesdits premier et deuxième moyens de stockage de fichiers (26, 38) sont disposés à distance l'un de l'autre et dans lequel lesdits moyens de gestion de fichiers comprennent :
a) un moyen de transfert de données couplé audit premier moyen de stockage de fichiers permettant de convertir une dite pluralité d'enregistrements numériques de ladite première base de données relationnelle dans un format de transfert de fichiers standard devant assurer le transfert vers ledit moyen de conversion,
b) ledit moyen de conversion inclut de moyen de désassemblage sensibles à la réception de ladite pluralité d'enregistrements numériques de ladite première base de données relationnelle dans ledit format de transfert de fichiers standard permettant d'identifier les informations contenues dans au moins les composants sélectionnés de leurs dits enregistrements numériques.

6. Procédé de conversion de données destiné à être utilisé avec un système de traitement de données numériques du type ayant un premier moyen de stockage de fichiers (26) permettant de stocker une première pluralité d'enregistrements numériques représentant les informations utilisées par un premier programme informatique sélectionné, un deuxième moyen de stockage de fichiers (38) en mesure de stocker une deuxième pluralité d'enregistrements numériques représentant au moins une partie desdites informations destinées à être utilisées par un deuxième programme informatique sélectionné, ledit procédé de conversion de données comprenant :
a) une étape de gestion des fichiers permettant de générer et de stocker une pluralité d'enregistrements numériques destinés à être utilisés par ledit deuxième programme informatique sélectionné, dans lequel chaque enregistrement numérique généré de ce type inclut au moins les informations sélectionnées provenant d'un enregistrement numérique correspondant dudit premier programme informatique,
b) ladite étape de gestion des fichiers incluant une étape de conversion permettant de générer lesdits enregistrements numériques destinés à être utilisés par ledit deuxième programme informatique en convertissant au moins les informations sélectionnées contenues dans l'enregistrement numérique correspondant dudit premier programme informatique, dans lequel ladite conversion est fonction de (i) l'identité dudit premier programme informatique sélectionné, et (ii) l'identité dudit deuxième programme informatique sélectionné, le procédé de conversion des données étant **caractérisé en ce que**
l'étape de conversion inclut l'étape consistant à générer lesdits enregistrements numériques destinés à être utilisés par ledit deuxième programme informatique convertissant lesdits enregistrements numériques correspondants dudit premier programme informatique sur une base champ par champ, et étant en outre **caractérisé par** les étapes consistant à :
c) stocker dans une table d'entrée une identité d'un sous-programme d'étapes permettant de convertir les informations contenues chacune dans au moins des champs sélectionnés dudit enregistrement numérique dudit premier programme sélectionné en informations contenues dans au moins un composant correspondant dudit enregistrement numérique dudit deuxième programme sélectionné, et
d) ladite étape d'exécution comprend des moyens permettant d'exécuter ledit sous-programme destiné à exécuter ladite procédure afin de réaliser ladite conversion, et facultativement,
e) dans lequel ladite étape d'exécution comprend en outre l'étape consistant à configurer une unité centrale de traitement pour exécuter un sous-programme identifié dans l'une desdites entrées de tables afin de réaliser une conversion.

7. Procédé de conversion de données selon la revendication 6 destiné à être utilisé avec un système de traitement de données numériques du type ayant un premier moyen de stockage de fichiers (26) permettant de stocker une première base de données relationnelle, ladite première base de données relationnelle incluant une pluralité d'enregistrements numériques représentant les informations utilisées par une première version sélectionnée d'un programme informatique, un deuxième moyen de stockage de fichiers (38) en mesure de stocker une deuxième base de données relationnelle; ladite deuxième base de données relationnelle incluant une pluralité d'enregistrements numériques représentant au moins une partie desdites informations destinées à être utilisées par une deuxième version sélectionnée dudit programme informatique, ledit procédé de conversion comprenant :
a) une étape de gestion des fichiers permettant de générer et de stocker dans ladite deuxième base de données relationnelle une pluralité d'enregistrements numériques destinés à être utilisés par ladite deuxième version sélectionnée dudit programme informatique, dans lequel chaque enregistrement numérique généré de ce type inclut au moins les informations sélectionnées provenant d'un enregistrement numérique correspondant de ladite première base de données relationnelle,
b) ladite étape de gestion des fichiers incluant une étape de conversion permettant de générer lesdits enregistrements numériques à stocker dans ladite deuxième base de données relationnelle, en convertissant au moins les informations sélectionnées contenues dans l'enregistrement numérique correspondant de ladite première base de données relationnelle, dans lequel ladite conversion est fonction de (i) l'identité de ladite première version sélectionnée dudit programme informatique, et (ii) l'identité de ladite deuxième version sélectionnée dudit programme informatique.

8. Procédé de conversion de données selon la revendication 7, comprenant
a) une étape de chargement de tables permettant de stocker, dans une table, au moins une entrée identifiant une procédure permettant de convertir les informations contenues dans au moins un composant d'un enregistrement numérique de ladite première base de données relationnelle en informations contenues dans au moins un composant correspondant d'un enregistrement numérique de ladite deuxième base de données relationnelle, et
b) dans lequel ladite étape de conversion inclut l'étape consistant à exécuter une procédure identifiée par une table d'entrée sélectionnée de ce type pour réaliser ladite conversion ; et, facultativement,
c) ladite étape de chargement de table comprend l'étape supplémentaire consistant à stocker une pluralité desdites tables d'entrées, chacune étant accessible en fonction des identités des versions dudit programme informatique entre lesquelles la procédure convertit les informations contenues dans lesdits composants desdits enregistrements numériques ; et
d) ladite étape d'exécution inclut l'étape consistant à accéder à un dit moyen de table d'entrées sélectionné (44), accession sur la base des identités desdites versions sélectionnées dudit programme informatique avec lequel sont associées lesdites première et deuxième bases de données relationnelles.

9. Procédé de conversion de données selon la revendication 8, dans lequel :
a) ladite étape de chargement de table inclut l'étape consistant à stocker, dans au moins une dite entrée de table, une identité d'un sous-programme d'étapes permettant de convertir les informations contenues dans au moins un composant d'un enregistrement numérique de ladite première base de données relationnelle en informations contenues dans au moins un composant correspondant d'un enregistrement numérique de ladite deuxième base de données relationnelle, et
b) ladite étape d'exécution comprend des moyens permettant d'exécuter ledit sous-programme destiné à exécuter ladite procédure afin de réaliser ladite conversion ; et, facultativement,
c) dans lequel ladite étape d'exécution comprend en outre l'étape consistant à configurer une unité centrale de traitement pour exécuter un sous-programme identifié dans l'une desdites entrées de tables afin de réaliser une conversion.

10. Procédé de conversion de données selon la revendication 7, dans lequel lesdits premier et deuxième moyens de stockage de fichiers (28, 38) sont disposés à distance l'un de l'autre, et dans lequel ladite étape de gestion des fichiers comprend :
a) une étape de transfert des données permettant de convertir ladite pluralité d'enregistrements numériques de ladite première base de données relationnelle dans un format de transfert de fichiers permettant d'assurer le transfert vers ledit moyen de conversion,
b) ladite étape de conversion inclut un moyen de désassemblage sensible à la récéption de ladite pluralité d'enregistrements numériques de ladite première base de données relationnelle dans ledit formant de transfert de fichiers standard permettant d'identifier les informations contenues dans au moins les composants sélectionnés de leurs dits enregistrements numériques.
